# EUROPEAN PATENT APPLICATION

(11) **EP 2 573 366 A2**
(43) Date of publication of application: **27.03.2013**
(21) Application number: 12183808.0
(22) Date of filing: 11.09.2012
(51) Int. Cl.: F02C 7/236, F02C 9/28

(54) **System and method for monitoring the fuel fed to the fuel supply pumps of a gas turbine engine**

(30) Priority: 20.09.2011 US 201113237780
(71) Applicant: General Electric Company, Schenectady, NY 12345 (US)
(72) Inventor: Hains, John Victor, Greenville, SC 29615 (US); Singh, Harpal, Greenville, SC 29615 (US)
(74) Representative: Cleary, Fidelma

(57) **Abstract**

A system (10) includes a forwarding skid (14) configured to forward a liquid supply from a liquid storage vessel (12) toward a downstream component (20). The forwarding skid (14) includes a pumping system (15) configured to receive a gravity feed of the liquid supply from the liquid storage vessel (12), and the pumping system (15) is configured to pump the liquid fuel supply toward the downstream component (20). The forwarding skid (15) also includes a monitoring system (13) configured to obtain at least one sensed parameter of the gravity feed of the liquid supply received at the forwarding skid (14) upstream from the pumping system (15). The at least one sensed parameter is indicative of a supply level remaining at the liquid storage vessel (12).

## Description

### BACKGROUND OF THE INVENTION

The subject matter disclosed herein relates to gas turbine systems that operate on liquid fuels, and more specifically, liquid fuel forwarding skids that are enabled to monitor fuel supply levels supplied to the gas turbine systems primarily from gravity feed fuel storage tanks.

Many gas turbine systems are powered by liquid fuel that is stored in gravity feed fuel storage tanks with gas turbine system unable to measure fuel level in the tanks. These gas turbine systems may include minimum liquid fuel pressure requirements to function properly. For example, these liquid fuel turbine systems may include a forwarding skid that receives the liquid fuel from the fuel storage tanks and forwards the liquid fuel to downstream components (e.g., heating skids, regulation skids, filtration equipment, flow conditioning equipment, and gas the turbine) using liquid fuel pumps. To operate properly, many liquid fuel pumps may have certain minimum fuel pressure requirements (e.g., a net positive suction head requirement). As the liquid fuel is consumed, the levels of fuel in the fuel storage tanks diminish, potentially causing the fuel pressure to dip below minimum fuel pressure requirements, and potentially causing problems in the turbine systems. Unfortunately, the forwarding skid does not obtain any measurement of the fuel level in the fuel storage tanks, and thus cannot predict when the tank will be at low fuel levels or empty.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a system including a forwarding skid configured to forward a liquid supply from a liquid storage vessel toward a downstream component. The forwarding skid includes a pumping system configured to receive liquid supply from the liquid storage vessel or source. The pumping system is configured to pump the liquid supply toward the downstream component. The forwarding skid also includes a monitoring system configured to obtain at least one sensed parameter of the liquid supply received at the forwarding skid upstream from the pumping system. The at least one sensed parameter is indicative of a supply level remaining at the liquid fuel storage vessel.

In a second aspect, the invention resides in a system including a control system configured to monitor the liquid fuel supply received at a forwarding skid from a liquid fuel storage vessel for delivery to a gas turbine. The control system is configured to obtain at least one sensed parameter of the liquid fuel supply received at the forwarding skid upstream from a pumping system of the forwarding skid. The at least one sensed parameter is indicative of a fuel supply level remaining at the liquid fuel storage vessel that provides the gravity feed of the liquid fuel supply to the forwarding skid. The control system is configured to trigger at least one alarm or at least one control action based on a comparison of the at least one sensed parameter with at least one threshold.

In a third aspect, the invention resides in a method including monitoring a liquid fuel supply received at a forwarding skid from a liquid fuel storage vessel for delivery to a gas turbine. Monitoring includes obtaining at least one sensed parameter of a gravity feed of the liquid fuel supply received at the forwarding skid upstream from a pumping system of the forwarding skid, where the at least one sensed parameter is indicative of a fuel supply level remaining at the liquid fuel storage vessel that provides the gravity feed of the liquid fuel supply to the forwarding skid. The method also includes triggering at least one alarm or at least one control action based on a comparison of the at least one sensed parameter with at least one threshold.

### BRIEF DESCRIPTION OF THE DRAWINGS

Embodiments of the present invention will now be described, by way of example only, with reference to the accompanying drawings in which:
FIG. 1 is a block diagram of a generic gas turbine liquid fuel system with a forwarding skid enabled to monitor liquid fuel supply levels, in accordance with an embodiment;
FIG. 2 is a schematic diagram of one type of forwarding skid of FIG. 1 enabled to communicate with a control system, in accordance with an embodiment;
FIG. 3 is a flow chart depicting a process for controlling the gas turbine liquid fuel system of FIG. 1 using the control system of FIG. 2, in accordance with an embodiment;
FIG. 4 is a flow chart depicting a process for determining and utilizing fuel supply levels of fuel storage, in accordance with an embodiment; and
FIG. 5 is a diagram illustrating an alarm reporting window of a control system configured to receive alarm alerts from the forwarding skid, based upon measurements received from the forwarding skid, in accordance with an embodiment.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments relate to forwarding skids for gas turbine liquid fuel systems that enable the monitoring of liquid fuel supply levels upstream of the forwarding skids. Such monitoring may enable gas turbine system operators and/or control systems to become aware of diminishing fuel supply levels, such that the gas turbine system may be controlled or provided additional fuel supplies before the fuel supply is depleted or dips below a minimum threshold level. Thus, the disclosed embodiments reduce the potential for component problems or downtime of the gas turbine liquid fuel system caused by shortage or lack of liquid fuel.

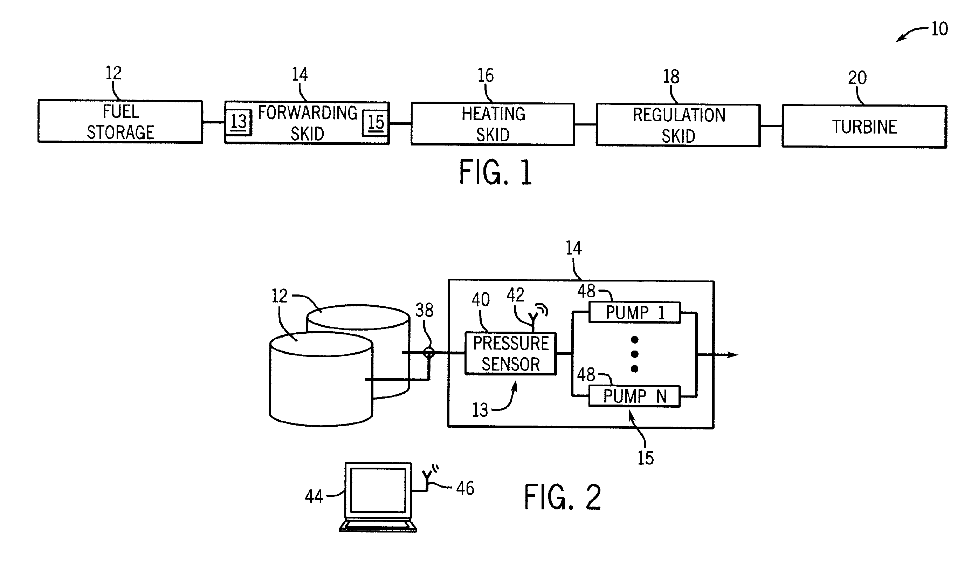

With the foregoing in mind, FIG. 1 represents a block diagram of a gas turbine liquid fuel system 10. A generic liquid fuel turbine system 10 includes fuel storage 12, a forwarding skid 14, a heating skid 16, a regulation skid 18, and a gas turbine 20. The fuel storage 12 may include one or more storage vessels that contain liquid fuel useful for powering a gas turbine 20. For example, the fuel storage 12 may include one or more fuel tanks, supply pipe lines, and/or tanker trucks that store liquid fuel. The liquid fuel from the fuel storage 12 is passed through to the gas turbine 20. The gas turbine 20 then consumes the liquid fuel, causing the liquid fuel levels to gradually deplete in the fuel storage 12.

The liquid fuel flows from the fuel storage 12 due to gravitational forces. In other words, the fuel storage 12 may be described as a gravity feed fuel storage 12, e.g., tank. The fuel storage 12 does not employ any pumps to force the flow of liquid fuel to the forwarding skid 14, and thus the skid 14 receives a gravity fed liquid fuel flow from the storage 12. The forwarding skid 14 is configured to pump the fuel supply forward to the downstream components (e.g., the heating skid 16, the regulation skid 18, and/or the gas turbine 20). As will be discussed in more detail below, the forwarding skid 14 is enabled to monitor liquid fuel supply levels of fuel storage 12. For example, the skid 14 may include a fuel intake monitoring system 13, which monitors one or more parameters of the gravity fed liquid fuel flow being received by the forwarding skid 14. In particular, the monitoring system 13 (e.g., one or more sensors) may monitor fuel pressure, flow rate, temperature or any combination thereof, and estimate a fuel level or remaining fuel supply in the storage 12. Information about the liquid fuel supply levels of the fuel storage 12 may be useful in modifying operation of the liquid fuel turbine system 10 to prevent problems with components of the liquid fuel turbine system 10.

In one example, the heating skid 16 may receive the forwarded liquid fuel from the forwarding skid 14. The heating skid 16 may heat the liquid fuel to a proper temperature to be consumed by the gas turbine 20. The heating skid 16 may pass the heated liquid fuel to the regulation skid 18. The regulation skid 18 may further modify the liquid fuel for consumption by the liquid fuel turbine 20. For example, the liquid fuel may be filtered or otherwise processed (e.g., regulate flow rate, pressure, etc. of the supplied fuel) by the regulation skid 18 for consumption by the liquid fuel turbine 20.

Turning now to FIG. 2, an embodiment of the gas turbine liquid fuel system 10 is illustrated with fuel storage 12 in the form of a plurality of tanks 12. The fuel storage 12 is coupled to the forwarding skid 14, such that liquid fuel is provided to the forwarding skid 14. One or more switches 38 may be configured to enable one or more of the plurality of tanks 12 to supply liquid fuel to the gas turbine liquid fuel system 10. For example, when the fuel in one tank 12 is close to being depleted, the switch 38 may selectively enable an additional tank 12 to provide liquid fuel to the skid 14.

The monitoring system 13 of the forwarding skid 14 includes a pressure sensor 40 with communications circuitry 42. The pressure sensor 40 determines an inlet pressure of the liquid fuel provided to the forwarding skid 14. The communications circuitry 42 enables communications with a control system 44 (e.g., a server, workstation, laptop, integrated controller, turbine controller, etc.) through communications circuitry 46 (e.g., wired and/or wireless communications) of the control system 44. For example, the communications circuitry 42 may provide pressure measurements obtained from the pressure sensor 40 to the control system 44 via the communications circuitry 46. The pressure measurements may be indicative of fuel levels in gravity feed tanks. The pumping system 15 of the forwarding skid 14 includes one or more pumps 48 to forward the liquid fuel to the downstream components (e.g., heating skid 16, regulation skid 18, and/or gas turbine 20). The pumps 48 may be in series or in parallel, as illustrated, and may be in any number , e.g., 1, 2, 3, 4, 5, 6, or more.

The one or more pumps 48 may have a minimum inlet pressure level to function properly. The minimum inlet pressure level may be a lower threshold, below which the pump is unable to adequately forward the liquid fuel. However, the minimum inlet pressure level also may be adjusted with some factor of safety. For example, certain pumps may require a Net Positive Suction Head of a specific Feet of Head. When the inlet pressure is below the Minimum Net Positive Suction Head, the gas turbine liquid fuel system 10 equipment may be starved of liquid fuel causing a variety of problems. For example, the gas turbine 20 may trip or flame out when an insufficient amount of liquid fuel is provided. Further, the lack of fuel may cause problems with the pumps 48, high pressure creating pumping equipment, and/or flow dividers that determine the path of the liquid fuel. These problems may include premature wear, performance degradation, or reduced life of the components. The control system 44 may provide alarms and/or control actions to help prevent the equipment damage from occurring.

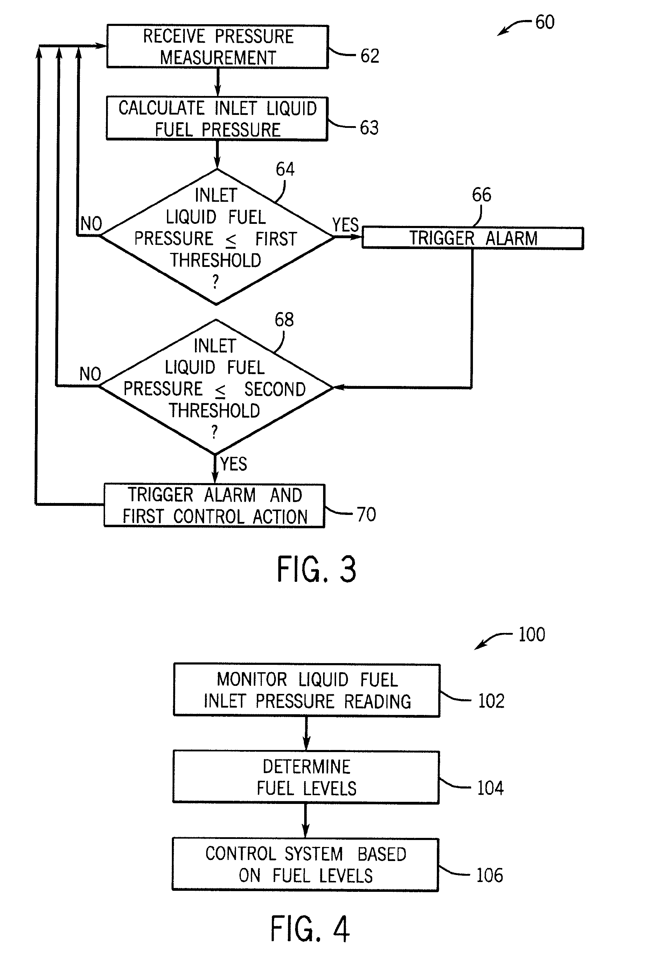

For example, FIG. 3 is a flow chart depicting an embodiment of a process 60 for controlling the liquid fuel gas turbine system 10 of FIG. 1. The process 60 may be a computer-implemented method, (e.g., implemented through the control system 44 of FIG. 2). Thus, computer-implemented instructions for performing the process 60 may be stored on a non-transitory computer readable medium. As previously discussed, the control system 44 receives pressure measurement data from the monitoring system 13 (e.g., pressure sensor 40) at the forwarding skid 14 (block 62). As will be described in more detail, with regards to FIG. 4, the control system 44 may use the pressure measurement data to calculate inlet liquid fuel pressure that is being provided to the one or more pumps 48 (block 63). In some embodiments, as will be discussed in more detail below, the pressure measurements may be associated with an amount of fuel supply (e.g., tank levels) that is available for the system 10.

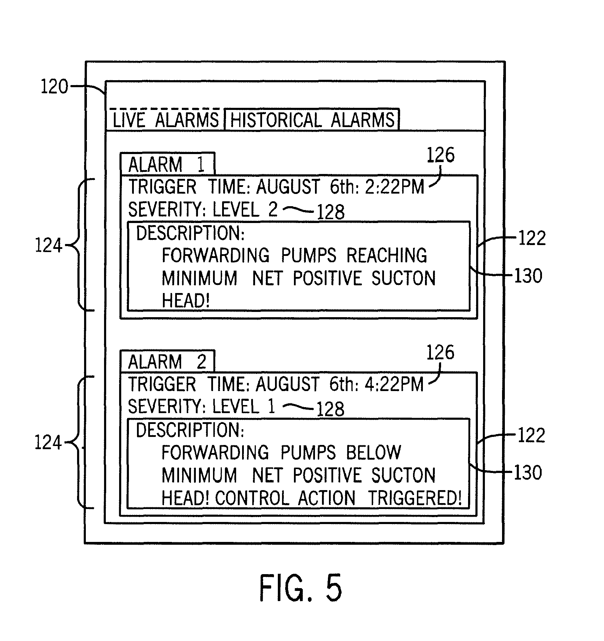

In certain embodiments, the control system 44 may compare the inlet liquid fuel pressure with a first threshold (block 64). The first threshold may be a threshold indicating that the fuel storage 12 is at a low level. For example, in some embodiments, the low level threshold may be a value within 15%, 20%, or 25% of the Minimum Net Positive Suction Head. When the inlet liquid fuel pressure is greater than the first threshold, the control system 44 may continue to poll for additional pressure measurements (block 62), as the fuel storage 12 has not been found to be at a low level. However, when the inlet liquid fuel pressure is less than or equal to the first threshold, the fuel storage 12 may be at the low level. As will be discussed in more detail with regards to FIGS. 3 and 5, the control system may trigger an alarm (block 66), notifying operators that the fuel storage 12 has reached the low level.

The control system 44 may then compare the inlet liquid fuel pressure with a second threshold (block 68). The second threshold may represent a inlet liquid fuel pressure that triggers a control action (e.g., because the inlet liquid fuel pressure is becoming very close to the Minimum Net Positive Suction Head for the pumps 48 to continue to function properly). For example, in some embodiments, the second threshold may be a value within 2%, 5%, or 10% of the Minimum Net Positive Suction Head.. If the inlet liquid fuel pressure is greater than the second threshold, the control system 44 may continue to monitor the pressure measurements (block 62). However, when the inlet liquid fuel pressure is less than or equal to the second threshold, the control system 44 may trigger another alarm and/or execute control actions to attempt to prevent gas turbine liquid fuel system 10 damage (block 70). For example, the control system 44 may selectively switch the fuel source of the gas turbine 20 to attempt to remedy the depleting liquid fuel supply. Alternatively, the control system 44 may shut down the gas turbine 20 so that the gas turbine 20 does not continue to run on a less than adequate fuel supply and incur damage. In certain embodiments, the control system 44 may control the switch 38 of FIG. 2 to switch to or add an additional fuel tank (e.g., fuel storage 12), such that additional fuel is supplied to the gas turbine system 10.

It is important to note, that while the embodiment illustrated in FIG. 3 provides two threshold comparisons, other embodiments may use any number of threshold comparisons (e.g., 1, 2, 3, 4, 5, 6, 7, 8, 9, 10, or more threshold comparisons). For example, in one embodiment, there may only be one threshold comparison that triggers an alarm and/or a first control action. In alternative embodiments many additional threshold values may be used, making the alarm notification and control actions more granularly triggered, based upon a comparison of a multitude of threshold values. Each of the threshold value comparisons may trigger an alert, a control action, or both. Different levels of alarms and control actions may be present. For example, for low level alarms, an inaudible visual indicator may be activated. As the alarms become more severe, audible indicators may be activated. Further, the control actions may be altered based upon levels of severity. For example, a first control action my attempt to switch or add additional liquid fuel tanks 12 to supplement the fuel supply. If the severity increases, the control action may increase by switching to an alternative fuel source (e.g., natural gas). If the severity continues to increase, a control action to shut down the system may be triggered.

After the alarms and/or control actions are triggered, the control system 44 may continue to poll for pressure measurements. As the pressure measurements change, the thresholds may change. For example, when a control action is triggered to obtain fuel from another fuel storage tank 12, the fuel supply may increase, causing the pressure measurements to increase. Thus, the inlet liquid fuel pressure may rise above the threshold values, and the alarms may be deactivated until the fuel sources are once again depleted to a level causing the threshold values to be breached.

In some embodiments, the pressure measurements may be polled at periodic time intervals. For example, the pressure measurements may be polled every 5 minutes, 1 hour, every 5 hours, or continuously in real-time. In some embodiments, the pressure may be polled more frequently as the inlet liquid fuel pressure gets closer to the Minimum Net Suction Head required by the pumps 48. For example, the control system 44 may poll every 5 hours when the inlet liquid fuel pressure has not breached the first threshold. After the first threshold is breached, the control system 44 may poll for pressure measurement on a more frequent basis (e.g., every 1 hour). Thus, the control system 44 may be appraised of pressure changes more frequently as the pressure levels become increasingly low.

FIG. 4 is a flow chart depicting a process 100 for determining and utilizing fuel supply levels of fuel storage 12 that may be implemented by the control system 44 of FIG. 2. The control system 44 monitors the inlet pressure provided from the fuel storage 12 (block 102). As previously discussed with regards to FIG. 2, the pressure sensor 40 may obtain the pressure reading and communicate the pressure reading to the control system 44 via communications circuitry 42. The control system 44 receives the pressure reading via communication circuitry 46. The control system 44 may determine fuel levels in the storage tanks 12 (block 104). For example, approximately 2.31 feet of water equals 1 psi of pressure. Thus, the control system 44 multiplies the pressure reading by 2.31 to convert the pressure reading into ft of liquid fuel in storage 12. Further, the converted pressure reading may be multiplied by the specific gravity of the liquid fuel to determine exact fuel level of the storage tanks 12. The control system 44 may control the system 10 based upon the fuel levels (block 106). For example, the control system 44 may trigger alarms and/or control actions based upon the determined fuel levels. Further, the control system 44 may provide a visual and/or audible indication of the determined fuel levels.

As previously discussed, the control system 44 of FIG. 2 may trigger one or more alarms based upon certain thresholds being breached. FIG. 5 is a diagram illustrating an embodiment of an alarm reporting window 120 of a computer configured to receive alarm alerts from the control system 44, based upon measurements received from the forwarding skid 14. The alarm reporting window 120 may include options to report on live alarms (e.g., alarms that are currently active). Further, the alarm reporting window 120 may include options to report on historical alarms (e.g., alarms that are active or previously were active). In the current embodiment, a reporting of historical alarms has been selected.

The alarm report may include a list of alarms 124 and associated information 122 relating to each alarm. For example, in the depicted embodiment, the alarm information 122 includes a trigger time 126 (e.g., a time when the alarm was first activated by the control system 44). The alarm information 122 may also include a level of severity 128 and a description of the alarm 130.

For example, as discussed with regards to FIG. 3, the control system 44 may compare the inlet liquid fuel pressure to a number of thresholds. Each threshold may be associated with a severity level. For example, the first threshold discussed in FIG. 3 may have a lower severity level than the second threshold level. Indeed, breaching the first threshold triggers an alarm but not a control action, whereas breaching the second threshold triggers an alarm and triggers a control action. In the depicted example of FIG. 5, alarm 1 triggered prior to alarm 2 because the first threshold was higher than the second threshold (e.g., Alarm 1 triggered at 2:22 PM, whereas Alarm 2 triggered at 4:22 PM). As illustrated, the severity level of the alarm is "2", illustrating a lower severity than severity level "1" alarms. In alternative embodiments, the severity level may increase with increasing severity of the alarms. The description 130 of alarm 1 may include a description of the alarm triggering event (e.g., that the inlet liquid fuel pressure is below the first threshold or a more generalized description that the Fuel level is getting low). Once another threshold is breached, the control system 44 of FIG. 2 may once again trigger an alarm and/or control action. In the depicted embodiment, alarm 2 has been triggered.

In certain embodiments, the control system 44 may forecast information about the fuel supply. For example, in certain embodiments, the control system 44 may determine a predicted time when the fuel supply levels will reach certain severity levels, current fuel levels, and/or fuel consumption rate. In some embodiments, the control system 44 may predict a time when alarms and/or control actions may be triggered in the future. The forecasted information may be provided to operators of the liquid fuel turbine system 10. For example, the forecasted information may be provided to the alarm reporting window 120 or other graphical presentation viewable by the operator. Such forecasting information may enable the operator to be more proactive in determining operational actions to counteract depleting fuel sources prior to the fuel source levels falling below certain threshold values. Thus, the operators may be enabled to prevent problems with the gas turbine liquid fuel system 10 prior to the liquid fuel levels reaching critically low levels.

Technical effects of the invention include a gas turbine liquid fuel system 10 that is enabled to determine liquid fuel levels from the fuel storage 12 without fuel measurements directly at the storage 12. In particular, the fuel level or quantity at the fuel storage 12 may be calculated or estimated based on one or more measurements (e.g., pressure measurements) separate from the storage 12 (e.g., at the forwarding skid 14.) As the liquid fuel levels drop, the liquid fuel pressure supplied to the forwarding skid 14 may drop below minimum pressure values suitable to reduce the possibility of problems with the various components of the gas turbine liquid fuel system 10. For example, a drop below the minimum liquid fuel pressure may cause problems with components of the forwarding skid 14, heating skid 16, the regulation skid 18, and/or the gas turbine 20. The control system 44 may interpret pressure readings transmitted from the forwarding skid 14, such that the fuel storage 12 levels may be determined. Alarms and control actions may be provided to the gas turbine liquid fuel system 10 as the fuel storage 12 levels reach certain thresholds of depletion. For example, when the control system 44 determines that the liquid fuel levels are at a low level, an audible and/or visual alarm may be triggered, providing operators notice of the depleting liquid fuel levels. Further, the control system 44 may trigger control actions at various levels of liquid fuel depletion. For example, the control system 44 may trigger control actions for supplying liquid fuel from additional fuel storage 12, switching the gas turbine's 20 fuel source, or shutting down the turbine 20. Additionally, the control system 44 may provide forecasting data of when the fuel storage 12 level will reach certain threshold levels. For example, the control system 44 may provide a notification that the fuel storage 12 levels will reach a low level (e.g., severity level 2 as discussed above with regards to FIG. 5). Further, the control system 44 may provide forecasts of when alarms and/or control actions may be triggered. The alarms and/or control actions along with the forecasting provided by the control system 44 may help reduce problems caused by insufficient fuel pressure provided to the components of the gas turbine liquid fuel system 10. For example, forecasting may enable operators of the gas turbine liquid fuel system 10 to become more aware of depleted fuel sources. Further, at certain severity levels, the control system 44 may trigger control actions to automatically affect a change in the gas turbine liquid fuel system 10, such that the fuel pressure is increased to a more suitable level.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   a control system configured to monitor a liquid fuel supply received at a forwarding skid from a liquid fuel storage vessel for delivery to a gas turbine, wherein the control system is configured to obtain at least one sensed parameter of a gravity feed of the liquid fuel supply received at the forwarding skid upstream from a pumping system of the forwarding skid, the at least one sensed parameter is indicative of a fuel supply level remaining at the liquid fuel storage vessel that provides the gravity feed of the liquid fuel supply to the forwarding skid, and the control system is configured to trigger at least one alarm or at least one control action based on a comparison of the at least one sensed parameter with at least one threshold.
2. The system of clause 1, wherein the control system is configured to trigger a first alarm or a first control action if the at least one sensed parameter indicates that the fuel supply level is at or below a first threshold fuel level, the control system is configured to trigger a second alarm or a second control action if the at least one sensed parameter indicates that the fuel supply level is at or below a second threshold fuel level, and the second threshold fuel level is less than the first threshold fuel level.
3. The system of clause 1 or 2, wherein the control system is configured to trigger a third alarm or a third control action if the at least one sensed parameter indicates that the fuel supply level is at or below a third threshold fuel level, and the third threshold fuel level is less than the second threshold fuel level.
4. The system of any of clauses 1 to 3, wherein the control system is configured to trigger a liquid fuel switch from the liquid fuel storage vessel to another liquid fuel storage vessel if the at least one sensed parameter indicates that the fuel supply level is at or below a threshold fuel level, the control system is configured to trigger a fuel switch from the liquid fuel storage vessel to another fuel type if the at least one sensed parameter indicates that the fuel supply level is at or below a threshold fuel level, or the control system is configured to trigger a gas turbine shutdown of the gas turbine if the at least one sensed parameter indicates that the fuel supply level is at or below a threshold fuel level, or any combination thereof.
5. The system of any of clauses 1 to 4, wherein the control system is configured to forecast information relating to the fuel supply level at the liquid fuel storage vessel.
6. The system of any of clauses 1 to 5, comprising at least one of the forwarding skid, the liquid fuel storage vessel, or the gas turbine, or any combination thereof.

## Claims

1. A system (10), comprising:
a forwarding skid (14) configured to forward a liquid supply from a liquid storage vessel (12) toward a downstream component, wherein the forwarding skid (14) comprises:
a pumping system (15) configured to receive a gravity feed of the liquid supply from the liquid storage vessel (12), and the pumping system (15) is configured to pump the liquid supply toward the downstream component; and
a monitoring system (13) configured to obtain at least one sensed parameter of the gravity feed of the liquid supply received at the forwarding skid (14) upstream from the pumping system (15), wherein the at least one sensed parameter is indicative of a supply level remaining at the liquid storage vessel (12).

2. The system of claim 1, wherein the system (10) is configured to estimate the supply level based on the at least one sensed parameter and a specific gravity of the liquid supply.

3. The system of claim 1 or 2, wherein the at least one sensed parameter comprises a pressure of the liquid supply received at the forwarding skid (14) upstream from the pumping system. (15)

4. The system of any of claims 1 to 3, wherein the forwarding skid comprises communications circuitry (42) configured to transmit the at least one sensed parameter to a control system (44).

5. The system of any of claims 1 to 4, comprising a control system (44) configured to trigger at least one alarm (124) or at least one control action or both based on a comparison of the at least one sensed parameter with at least one threshold.

6. The system of claim 5, wherein the control system (44) is configured to trigger a first alarm (124) if the at least one sensed parameter indicates that the supply level is at or below a first threshold level, the control system (44) is configured to trigger a second alarm (124) if the at least one sensed parameter indicates that the supply level is at or below a second threshold level, and the second threshold level is less than the first threshold level.

7. The system of claim 5, wherein the control system (44) is configured to trigger a first control action if the at least one sensed parameter indicates that the supply level is at or below a first threshold level, the control system (44) is configured to trigger a second control action if the at least one sensed parameter indicates that the supply level is at or below a second threshold level, and the second threshold level is less than the first threshold level.

8. The system of any of claims 5 to 7, wherein the control system (44) is configured to trigger a liquid switch from the liquid storage vessel to another liquid storage vessel (12) if the at least one sensed parameter indicates that the supply level is at or below a threshold level.

9. The system of any of claims 5 to 7, wherein the control system (44) is configured to trigger a switch from the liquid storage vessel (12) to another type if the at least one sensed parameter indicates that the supply level is at or below a threshold level.

10. The system of any of claims 5 to 7, wherein the control system (44) is configured to trigger a downstream component shutdown of the downstream component if the at least one sensed parameter indicates that the supply level is at or below a threshold level.

11. The system of claim 5, wherein the downstream component comprises a gas turbine (20) , wherein the control system (44) is configured to control operation of the system to protect the gas turbine (20) from a shortage based at least in part upon the at least one sensed parameter.

12. A method, comprising:
monitoring a liquid fuel supply received at a forwarding skid (14) from a liquid fuel storage vessel (12) for delivery to a gas turbine (20), wherein monitoring comprises obtaining at least one sensed parameter of a gravity feed of the liquid fuel supply received at the forwarding skid (14) upstream from a pumping system (15) of the forwarding skid (14), and the at least one sensed parameter is indicative of a fuel supply level remaining at the liquid fuel storage vessel (12) that provides the gravity feed of the liquid fuel supply to the forwarding skid (14); and
triggering at least one alarm (124) or at least one control action based on a comparison of the at least one sensed parameter with at least one threshold.

13. The method of claim 12, wherein triggering the at least one alarm (124) or the at least one control action comprises triggering a first alarm (124) or a first control action if the at least one sensed parameter indicates that the fuel supply level is at or below a first threshold fuel level, and triggering a second alarm (124) or a second control action if the at least one sensed parameter indicates that the fuel supply level is at or below a second threshold fuel level, and the second threshold fuel level is less than the first threshold fuel level.

14. The method of claim 12, wherein triggering the at least one alarm (124) or the at least one control action comprises triggering a liquid fuel switch from the liquid fuel storage vessel (12) to another liquid fuel storage vessel if the at least one sensed parameter indicates that the fuel supply level is at or below a threshold fuel level, triggering a fuel switch from the liquid fuel storage vessel (12) to another fuel type if the at least one sensed parameter indicates that the fuel supply level is at or below a threshold fuel level, or triggering a gas turbine shutdown of the gas turbine (20) if the at least one sensed parameter indicates that the fuel supply level is at or below a threshold fuel level, or any combination thereof.
